# EUROPEAN PATENT SPECIFICATION

(11) **EP 2 537 407 B1**
(45) Date of publication and mention of the grant of the patent: **25.12.2013**
(21) Application number: 11180110.6
(22) Date of filing: 06.09.2011
(51) Int. Cl.: A01F 15/18

(54) **Roller for an agricultural baler**
Walze für eine landwirtschaftliche Ballenpresse
Rouleau pour presse agricole à balles

(30) Priority: 21.06.2011 DE 102011051222
(43) Date of publication of application: 26.12.2012
(73) Proprietor: Usines Claas France S.A.S, 57140 Metz (FR)
(72) Inventor: Rongvaux, Laurent, 55160 Butgneville (FR); Baros, Geoffroy, 90130 Montreux Chateau (FR)

(56) References cited:
- EP-A1- 1 927 279
- US-A- 4 198 804
- US-A- 5 181 461
- US-A- 6 044 556

## Description

The invention relates to a roller for an agricultural baler according to the preamble of claim 1.

Agricultural balers, in particular round balers, are equipped with a plurality of rollers which are mounted rotatably about a rotation axis with respect to the housing of the press. Depending on the type of construction of the baler, the rollers are arranged peripherally or partially peripherally around the pressing chamber, in order to completely or partially delimit the pressing chamber at its periphery.

A main function of the rollers consists in applying compressive forces onto the material for pressing, in order to compact this into a bale in the pressing chamber. Partially, very high forces act here onto the individual rollers. The rollers arranged in the lower region of the pressing chamber are particularly highly stressed, because in addition to the stressing by compressive forces, they also have to bear the net weight of the bales, weighing up to tons. This requires a correspondingly robust construction of the rollers.

In addition, the rollers are given a conveying function, for which reason they are mounted rotatably on the press housing and are either actively driven or undertake at least a passive conveying. To guarantee a good conveying effect, the roller surfaces are therefore mostly provided with a profiling which can also contribute to desired processing (for example squeezing or cracking) of the material. Owing to the high forces acting on the outer peripheral surface of the rollers, these are exposed to intensive wear.

In rollers known from the prior art, the peripheral surface of the rollers is produced from a metal sheet which is welded to form a tube, which in turn is welded with roller core of basic cylindrical shape. Such rollers are indeed very robust but have a high net weight and, due to the welding, are only able to be produced with great effort. In the case of wear of the peripheral surface, the entire roller must be exchanged, because a replacement of the peripheral surface can take place practically only with the destruction or damage of the roller core.

To facilitate the exchange of a worn peripheral surface, EP 1 927 279 proposes providing rollers with a casing which is exchangeable with respect to the roller core, wherein the exchangeability of the casing is to be ensured in that it is secured in a force-fitting manner, preferably by shrink fitting, on the metallic roller core. This roller has a high net weight and, owing to the thermal treatment on shrink fitting of the casing, requires a high production expenditure.

It is an object of the present invention to indicate a roller of the type named in the introduction which, reaching the strength necessary for the intended operation, has a reduced weight and is able to be produced and disassembled simply and hence at a favourable cost.

The problem is solved by a roller having the features of claim 1. According to the invention, the roller, comprising a roller core rotatable about a rotation axis, the superficies surface of which roller core is surrounded by a casing, is characterized in that the roller core is manufactured from plastic. Overcoming previous assumptions, it has been recognized here according to the invention that the roller core of rollers under consideration can be advantageously manufactured from plastic, which with a suitable configuration of casing and roller core leads to various advantages with regard to the weight and the capability of the roller to be produced or respectively disassembled. In a roller core with an approximately cylindrical basic shape - as is regularly necessary - the achieving of a sufficient strength from plastic can be guaranteed. At the same time, a saving on weight is reached, which in sum is considerable, owing to the high number of rollers incorporated in one baler.

Basically, the roller core can be constructed and structured in different ways. According to an advantageous further development of the invention, the roller core has a hollow profile with substantially radially-running reinforcements. The reinforcements ensure that forces actually acting on the roller can be received. In contrast, free spaces in the roller core, resulting through the hollow profile, contribute to a reduced overall weight of the roller.

The roller core can be embodied as a single-piece plastic component. To facilitate the mounting and to guarantee and adaptability to different roller widths, the roller core can, however, in a particularly advantageous manner consist of several substantially cylindrical core elements, which are arranged adjoining each other axially in relation to the rotation axis. According to the necessary roller width, in this case a corresponding number of core elements come into use for a roller. An exchangeability in the case of wear of an individual core element is, in addition, possible.

So that the roller core can transmit a drive torque onto the casing, and to guarantee a form-fitting connection of casing and roller core, advantageously the superficies surface of the roller core has a profiling corresponding to the inner side of the casing. By reciprocal engagement of the inner side of the casing and the peripheral surface of the roller core, thereby a simply detachable shaft-hub connection is created.

With the use of a roller core consisting of several core elements, according to an advantageous further development of the invention, profilings are formed on end faces of adjacent core elements, which make possible a torque transmission between the core elements. Thereby, the roller core can be given the function of a drive shaft, so that the casing of the roller is relieved of the torque transmission and accordingly can be constructed thinner.

To convert a torque transmission between the core elements, advantageously each core element is provided on a first end face with projections, and with depressions on a second end face, which lies on a side of the core element facing away from the first end face. The projections and depressions are expediently arranged at equal distances over a peripheral region of the respective end face.

In particular in the case of a roller core configured in several parts, advantageously a central passage is formed in the roller core, through which a shaft or axis is guided serving for the rotatable mounting of the roller. In addition to mounting the roller with respect to a housing of the press, such a shaft or axis can be given the function of fixing the core elements with respect to each other. This can take place for example in that clamping elements fastened on the shaft or axis brace the several core elements axially against each other. For this, on both sides of the roller core clamping elements can be arranged, which rest axially respectively on a fastening element, for example a screw in the end faces of the shaft or respectively axis, in order to thus clamp the core elements against each other to a fixed body.

For the introduction of a torque from a drive shaft into the roller core, advantageously the central passage in the roller core has an inner profiling, which corresponds to an outer profiling formed on the shaft. This step creates a form-fitting shaft-hub connection, which can be released in a simple manner.

An overall simple capability of the roller to be manufactured and dismantled results by the casing advantageously consisting of several shell elements surrounding the superficies surface respectively partially circumferentially, which are connected with each other to form a closed casing. In this case, the casing can be produced without welding and can be dismantled - without it having to be destroyed - for repair or maintenance purposes.

According to an advantageous further development of the invention, in the superficies surface of the roller core at least one elongated recess is formed running in axial direction, which receives connecting elements provided on the shell elements.

The invention is explained in further detail below with reference to the attached figures by the help of an example embodiment. Further details and advantages of the invention also emerge therefrom.
- Fig. 1: shows a diagrammatic side view of an agricultural round baler,
- Fig. 2: shows a perspective view of a roller according to the invention according to the example embodiment,
- Fig. 3: shows an exploded illustration of the roller of Fig. 2,
- Fig. 4: shows a view of the roller of Fig. 2 from the front, and
- Fig. 5: shows a view of the roller of Fig. 2 according to the sectional plane A-A indicated in Fig. 4.

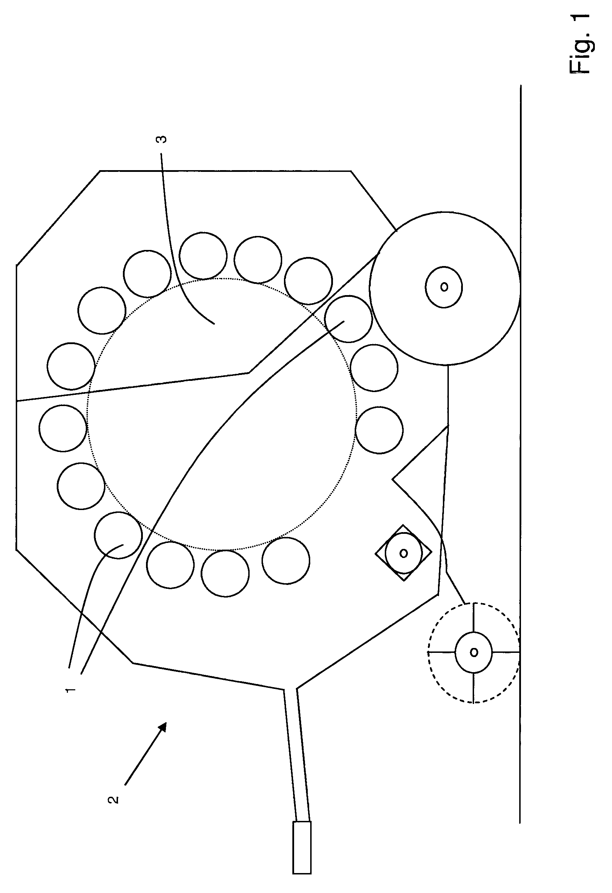

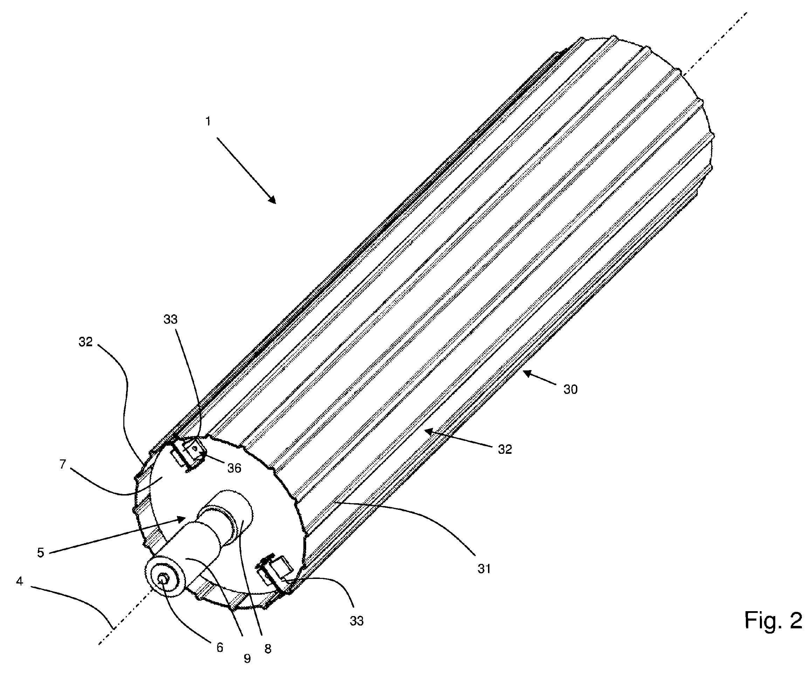

In Fig. 1 an agricultural round baler 2 is illustrated, which can be drawn over a field in order to collect mown plant material by means of a collecting arrangement (not indicated), to break it up by a cutting arrangement (not indicated) and to feed it to a pressing chamber 3. The pressing chamber 3 with an approximately cylindrical interior is delimited at its periphery by a plurality of rollers 1, mounted rotatably with respect to a housing (not indicated). The rollers 1 serve as pressing means for the plant material entering into the pressing chamber 3. The rollers 1, which are illustrated diagrammatically, are rollers 1 according to the invention, described in further detail below with the aid of Fig. 2 to 5.

It is pointed out that the round baler 2 shown in Fig. 1 has exclusively rollers 1 as pressing means. Deviating from this, in another type of construction of a press, a different number of rollers or respectively a different arrangement of the rollers can come into use. A combination of rollers with other pressing means, for example revolving belts, is also conceivable.

Fig. 2 to 5 show in different views an example embodiment of a roller 1 according to the invention, which can be installed into a round baler 2 according to Fig. 1 or into another agricultural baler. The function and effect of the roller 1 is described below with reference to Fig. 2 to 5.

Firstly, Fig. 2 shows a roller 1 according to the invention in assembled state, in perspective view. The roller 1 has a casing 30 which surrounds a roller core on the peripheral side. The roller core is covered towards the exterior on its superficies surface 11 by the casing 30, on its end faces by discs 7, and is therefore not visible in Fig. 2. A shaft 5 with a rotation axis 4, guided through the roller core, serves for the rotatable mounting of the roller 1. Sleeves 8, 9 are arranged on the shaft 5, which are secured axially by a screw 6. By the arrangement of the sleeves 8, 9 in combination with the screw 6 on the shaft 5, an axial clamping of the roller core on the shaft 5 is possible. The casing 30 of the roller 1 comprises two shell elements 32, which are constructed as half shells of equal shape with an outer profiling serving for the processing and conveying of the material for pressing. The shell elements 32 have, in opposite regions, two respectively inwardly bent contact sections 33, which (viewed in axial direction) extend over the width of the roller 1. At the contact sections 33, the two shell elements 32 touch each other and are detachably connected with each other. Connecting elements, acting in a form-fitting manner, which are yet to be explained, which are constructed on the contact sections 33, serve for the connection. In addition, screw connections 36 come into use. The connection of the shell elements 32 is accordingly configured so as to be detachable.

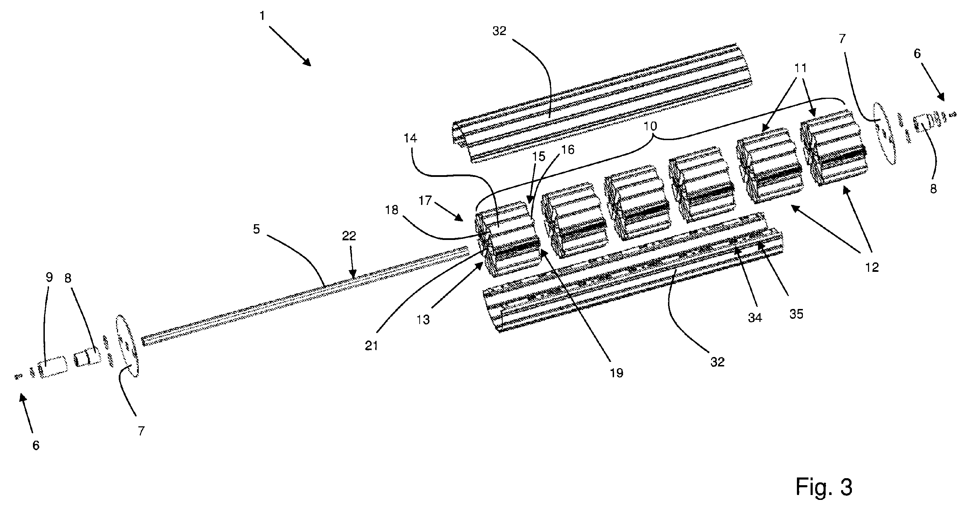

As can be seen from the exploded illustration of Fig. 3, the roller 1 has in the interior a roller core 10, which in the example embodiment consists of six core elements 12 of identical shape. Depending on the desired roller width, a different number of core elements 12 can be used. Each of the core elements 12 has a substantially cylindrical basic shape and is manufactured from plastic. The core elements 12 do not consist here of solid material, but rather have a hollow profile with reinforcements 13 running radially from the interior towards the exterior. Through the reinforcements 13, the core elements 12 are given a sufficiently high strength with a weight-saving light hollow construction. The core elements 12 have respectively a first end face 15, on which projections 16 are constructed, protruding from the end face 15 at an equal distance from each other over the periphery. Correspondingly, the core elements 12 have on their side facing away from the first end face 15 a second end face 17, on which depressions 18 are constructed which are worked into the end face 17, at equal distances from each other over the periphery. Through the end face profiling which is thus provided at the end faces 15 or respectively 17, the core elements 12 can be joined together in axial direction in a form-fitting manner such that torques can be transmitted via the core elements 12. The projections 16 and depressions 18 of adjacent core elements 12 engage here into each other and form a form fit.

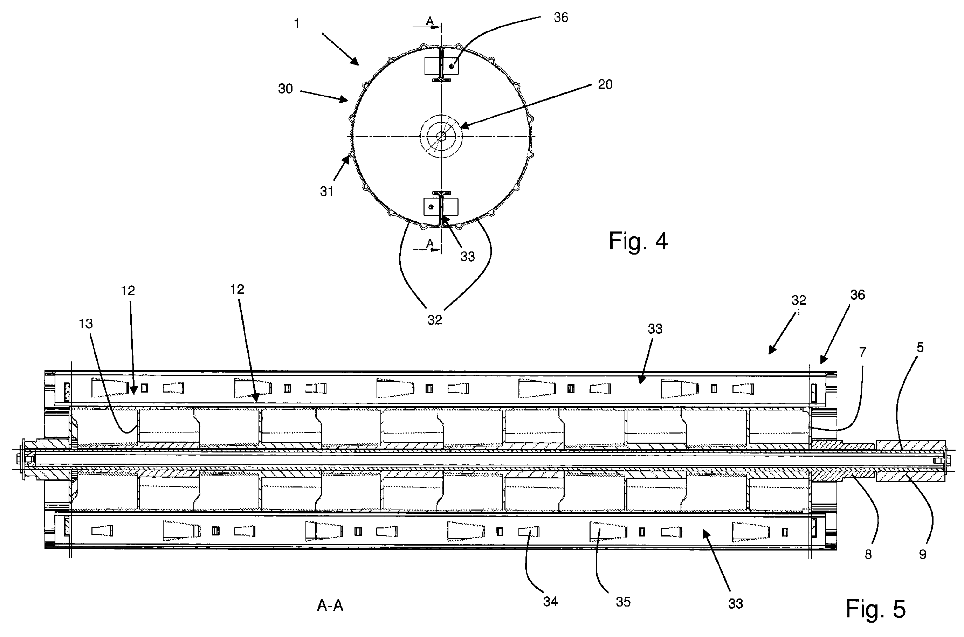

As can be seen from Fig. 4, a central passage 20, coinciding with the rotation axis of the roller 1, is formed in each case in the core elements 12. The shaft 5, illustrated in Fig. 3, can be guided through this passage 20. The shaft 5 has an outer profiling 22, which engages into an inner profiling 21 formed on the core elements 12 in the passage 20, in order to form a form-fitting shaft-hub connection, which makes possible a torque transmission to the drive of the roller 1 via the shaft 5.

As can be seen from Fig. 3, the six core elements 12 can be braced axially with respect to each other on the shaft 5. For this, on both sides of the roller core 10 respectively a disc 7 is pushed onto the shaft 5, which is secured substantially by sleeves 8 or respectively 9 and axial screws 6. The sleeves 8 serve for the mounting of the profiled shaft 5 in roller bearings, which are not shown, which can be provided on the housing of a baler for the rotatable mounting of the roller 1. The sleeve 9 serves for the spaced fastening of a toothed wheel - not shown - serving for the drive of the shaft 5.

The core elements 12 have on their peripheral surface a circumferential profiling 14 and two elongated, axially extending recesses 19 on diametrically opposite regions of the core elements 12.

The profiling 14 of the peripheral surface of the core elements 12 corresponds to the outer profiling 31 of the shell elements 32 already illustrated in Fig. 2. Accordingly, the profiling 14 engages on the inner side into the shell elements 32, in order to produce for each form fit an easily producible and re-detachable shaft-hub connection between roller core 10 and casing 30, so that torques can be transmitted here also.

The production of a roller 1 according to the invention takes place in the following manner: Firstly, the two shell elements 32 are joined together and connected to form a closed casing 30. For this, the shell elements 32 are brought into a position with contact sections 33 facing each other. As can be seen in Fig. 5, lugs 34 and recesses 35, serving as connecting elements, are formed alternately on the contact sections 33. The shell elements 32 are joined in axial direction with respect to each other by means of these connecting elements 34, 35, whereby the lugs 34 and recesses 35 of the shell elements 32 engage into each other in order produce a form-fitting connection between the shell elements 32 - and hence a closed casing 30.

The roller core 10 is subsequently inserted into the casing 30 in axial direction and is secured with respect to the casing 30. For this, firstly the six core elements 12 are placed against each other at their end faces 15, 17 and are thereby brought into form-fitting contact. The shaft 5 is guided through the passage 20 through the roller core 10 and an axial bracing of the roller core 10 takes place by means of the axial securing elements (disc 7, sleeves 8, 9, screw 6). Finally, the roller core 10 is introduced axially into the casing 30 and is secured by means of a screw connection 36 with respect to the casing 30. Elongated recesses 19, formed on the roller core 10, i.e. on the core elements 12, running in axial direction, receive the inwardly projecting contact sections 33 of the casing 30.

The roller 1 can be produced without welding and in the case of wear of individual components can be dismantled with minimal effort in a non-destructive manner for maintenance purposes or for other reasons. The high number of parts of identical type facilitates their storage and has a cost-reducing effect. The roller core 10, manufactured from plastic has a high strength, with a low weight owing to the configuration of the core elements 12, with the reinforcements 13, so that as a result a roller is created which has a long lifespan with a reduced overall weight compared with a conventional construction.

### List of reference numbers

| | | | |
|---|---|---|---|
| 1 | roller | 30 | casing |
| 2 | round baler | 31 | outer profiling |
| 3 | pressing chamber | 32 | shell element |
| 4 | rotation axis | 33 | contact section |
| 5 | shaft | 34 | lug |
| 6 | screw | 35 | recess |
| 7 | disc | 36 | screw connection |
| 8 | sleeve | | |
| 9 | sleeve | | |
| 10 | roller core | | |
| 11 | superficies surface | | |
| 12 | core element | | |
| 13 | reinforcement | | |
| 14 | profiling | | |
| 15 | first end face | | |
| 16 | projection | | |
| 17 | second end face | | |
| 18 | depression | | |
| 19 | elongated recess | | |
| 20 | passage | | |
| 21 | inner profiling | | |
| 22 | outer profiling | | |

## Claims

1. Roller (1) for an agricultural baler (2), comprising a roller core (10) rotatable about a rotation axis (4), the superficies surface (11) of which roller core (10) is surrounded by a casing (30),
**characterized in that** the roller core (10) is manufactured from plastic.

2. Roller according to claim 1, **characterized in that** the roller core (10) has a hollow profile with substantially radially-running reinforcements (13).

3. Roller according to claim 1 or 2, **characterized in that** the roller core (10) consists of several substantially cylindrical core elements (12), which are arranged adjoining each other axially in relation to the rotation axis (4).

4. Roller according to one of the preceding claims, **characterized in that** the superficies surface (11) of the roller core (10) has a profiling (14) corresponding to the inner side of the casing (30).

5. Roller according to one of the preceding claims, **characterized in that** on end faces (15, 17) of adjacent core elements (12) profilings (16, 18) are formed, which make possible a torque transmission between the core elements (12).

6. Roller according to one of the preceding claims, **characterized in that** each core element (12) is provided on a first end face (15) with projections (16) and with depressions (18) on a second end face (17) which lies on a side of the core element (12) facing away from the first end face (15).

7. Roller according to one of the preceding claims, **characterized in that** in the roller core (10) a central passage (20) is formed, through which a shaft (5) or axis is guided, serving for the rotatable mounting of the roller (1).

8. Roller according to claim 7, **characterized in that** clamping elements (6, 7, 8, 9) fastened on the shaft (5) or axis brace the several core elements (12) axially against each other.

9. Roller according to one of claims 7 or 8, **characterized in that** the central passage (20), for torque-proof mounting of the roller (1) on the shaft (5) or axis has an inner profiling (21), which corresponds to an outer profiling (22) formed on the shaft (5) or axis.

10. Roller according to one of the preceding claims, **characterized in that** the casing (30) consists of several shell elements (32) surrounding the superficies surface (11) respectively partially circumferentially, which are connected with each other to form a closed casing (30).

11. Roller according to one of the preceding claims, **characterized in that** in the superficies surface (11) of the roller core (10) at least one elongated recess (19) is formed running in axial direction, which receives connecting elements (33, 34, 35, 36) provided on the shell elements (32).

## Patentansprüche

1. Rolle (1) für eine landwirtschaftliche Ballenpresse (2), die einen Rollenkern (10) aufweist, der um eine Rotationsachse (4) drehbar ist, wobei die Mantelflächenoberfläche (11) des Rollenkerns (10) von einem Gehäuse (30) umgeben ist,
**dadurch gekennzeichnet, dass** der Rollenkern (10) aus Plastik hergestellt ist.

2. Rolle nach Anspruch 1, **dadurch gekennzeichnet, dass** der Rollenkern (10) ein Hohlprofil mit im Wesentlichen radial laufenden Verstärkungen (13) hat.

3. Rolle nach Anspruch 1 oder 2, **dadurch gekennzeichnet, dass** der Rollenkern (10) aus mehreren im Wesentlichen zylindrischen Kernelementen (12) besteht, die nebeneinander axial in Bezug zu der Rotationsachse (4) eingerichtet sind.

4. Rolle nach einem der vorhergehenden Ansprüche, **dadurch gekennzeichnet, dass** die Mantelflächenoberfläche (11) des Rollenkerns (10) ein Profil (14) hat, das der Innenseite des Gehäuses (30) entspricht.

5. Rolle nach einem der vorhergehenden Ansprüche, **dadurch gekennzeichnet, dass** auf Endflächen (15, 17) nebeneinanderliegender Kernelemente (12) Profile (16, 18) ausgebildet sind, die eine Drehmomentübertragung zwischen den Kernelementen (12) ermöglichen.

6. Rolle nach einem der vorhergehenden Ansprüche, **dadurch gekennzeichnet, dass** jedes Kernelement (12) auf einer ersten Endseite (15) mit Vorsprüngen (16) versehen ist und mit und Vertiefungen (18) auf einer zweiten Endseite (17), die auf einer Seite des Kernelements (12) liegt, die von der ersten Endseite (15) abgewandt ist.

7. Rolle nach einem der vorhergehenden Ansprüche, **dadurch gekennzeichnet, dass** in dem Rollenkern (10) eine zentrale Passage (20) ausgebildet ist, durch welche eine Welle (5) oder Achse geführt ist, die für die drehbare Montage der Rolle (1) dient.

8. Rolle nach Anspruch 7, **dadurch gekennzeichnet, dass** Klemmelemente (6, 7, 8, 9), die auf der Welle (5) oder Achse befestigt sind, die verschiedenen Kernelemente (12) axial gegeneinander verstreben.

9. Rolle nach einem der Ansprüche 7 oder 8, **dadurch gekennzeichnet, dass** die zentrale Passage (20) für die drehfeste Montage der Rolle (1) auf der Welle (5) oder Achse ein Innenprofil (21) hat, das einem Außenprofil (22), das auf der Welle (5) oder Achse ausgebildet ist, entspricht.

10. Rolle nach einem der vorhergehenden Ansprüche, **dadurch gekennzeichnet, dass** das Gehäuse (30) aus mehreren Schalenelementen (32) besteht, die die Mantelflächenoberfläche (11) jeweils teilweise umfänglich umgeben, die miteinander verbunden sind, um ein geschlossenes Gehäuse (30) zu bilden.

11. Rolle nach einem der vorhergehenden Ansprüche, **dadurch gekennzeichnet, dass** in der Mantelflächenoberfläche (11) des Rollenkerns (10) mindestens eine längliche Vertiefung (19) ausgebildet ist, die in axiale Richtung verläuft, die Verbindungselemente (33, 34, 35, 36) aufnimmt, die auf den Schalenelementen (32) vorgesehen sind.

## Revendications

1. Rouleau (1) pour presse agricole à balles (2), comprenant un noyau de rouleau (10) rotatif autour d'un axe de rotation (4), la surface superficielle (11) dudit noyau de rouleau (10) étant entourée par une enveloppe (30),
**caractérisé en ce que** le noyau de rouleau (10) est en matière plastique.

2. Rouleau selon la revendication 1, **caractérisé en ce que** le noyau de rouleau (10) a un profil creux comportant des renforts substantiellement radiaux (13).

3. Rouleau selon la revendication 1 ou 2, **caractérisé en ce que** le noyau de rouleau (10) est constitué de plusieurs éléments de noyau substantiellement cylindriques (12), qui sont disposés contigus entre eux axialement par rapport à l'axe de rotation (4).

4. Rouleau selon l'une des revendications précédentes, **caractérisé en ce que** la surface superficielle (11) du noyau de rouleau (10) a un profil (14) qui correspond au côté intérieur de l'enveloppe (30).

5. Rouleau selon l'une des revendications précédentes, **caractérisé en ce que** sur les faces d'extrémité (15, 17) d'éléments de noyau adjacents (12), des profils (16, 18) sont formés, qui rendent possible une transmission de couple entre les éléments de noyau (12).

6. Rouleau selon l'une des revendications précédentes, **caractérisé en ce que** chaque élément de noyau (12) est pourvu de protubérances (16) sur une première face d'extrémité (15) et de creux (18) sur une deuxième face d'extrémité (17) qui se trouve sur un côté de l'élément de noyau (12) tourné à l'écart de la première face d'extrémité (15).

7. Rouleau selon l'une des revendications précédentes, **caractérisé en ce que** dans le noyau de rouleau (10), un passage central (20) est formé, dans lequel un arbre (5) ou axe est guidé, qui sert au montage rotatif du rouleau (1).

8. Rouleau selon la revendication 7, **caractérisé en ce que** des éléments de serrage (6, 7, 8, 9) fixés sur l'arbre (5) ou axe calent les différents éléments de noyau (12) axialement les uns contre les autres.

9. Rouleau selon l'une des revendications 7 et 8, **caractérisé en ce que** le passage central (20), pour un montage du rouleau (1) sur l'arbre (5) ou axe résistant au couple, comporte un profil interne (21), qui correspond à un profil externe (22) formé sur l'arbre (5) ou axe.

10. Rouleau selon l'une des revendications précédentes, **caractérisé en ce que** l'enveloppe (30) est constituée de plusieurs éléments de coque (32) entourant la surface superficielle (11) respectivement partiellement de façon circonférentielle, qui sont connectés les uns aux autres pour former une enveloppe fermée (30).

11. Rouleau selon l'une des revendications précédentes, **caractérisé en ce que** dans la surface superficielle (11) du noyau de rouleau (10), au moins un évidement allongé (19) est formé dans la direction axiale, qui reçoit des éléments de connexion (33, 34, 35, 36) placés sur les éléments de coque (32).
